(19) Europäisches Patentamt
European Patent Office
Office européen des brevets

(11) **EP 3 824 211 B1**

(12) **EUROPÄISCHE PATENTSCHRIFT**

(45) Veröffentlichungstag und Bekanntmachung des Hinweises auf die Patenterteilung:
**10.07.2024 Patentblatt 2024/28**

(21) Anmeldenummer: **19737538.9**

(22) Anmeldetag: **10.07.2019**

(51) Internationale Patentklassifikation (IPC):
**F16L 5/04** (2006.01)

(52) Gemeinsame Patentklassifikation (CPC):
**F16L 5/04**

(86) Internationale Anmeldenummer:
**PCT/EP2019/068517**

(87) Internationale Veröffentlichungsnummer:
**WO 2020/016073 (23.01.2020 Gazette 2020/04)**

(54) **DURCHFÜHRUNGSMODUL ZUM EINBAU IN EINE HOLZKONSTRUKTION**

FEEDTHROUGH MODULE FOR INSTALLATION IN A WOODEN STRUCTURE

MODULE DE PASSAGE DESTINÉ AU MONTAGE DANS UNE CONSTRUCTION EN BOIS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.07.2018 EP 18183889**

(43) Veröffentlichungstag der Anmeldung:
**26.05.2021 Patentblatt 2021/21**

(73) Patentinhaber: **Hilti Aktiengesellschaft**
**9494 Schaan (LI)**

(72) Erfinder: **SIMON, Sebastian**
**86807 Buchloe Lindenberg (DE)**

(74) Vertreter: **Hilti Aktiengesellschaft**
**Corporate Intellectual Property**
**Feldkircherstrasse 100**
**Postfach 333**
**9494 Schaan (LI)**

(56) Entgegenhaltungen:
CH-A5- 679 622    DE-U1- 202015 000 505

• EHRLENSPIEL R. ET AL: "Temperaturbeanspruchung von Bauholz T 2951", 31 October 2000 (2000-10-31), pages 1 - 38, XP055975214, Retrieved from the Internet <URL:https://www.irbnet.de/daten/rswb/01039013007.pdf> [retrieved on 20221026]
• A. GILKA-BÖTZOW ET AL: "The velocity of combustion in relation to the density of wood", HOLZ ALS ROH- UND WERKSTOFF., vol. 69, no. 1, 21 April 2010 (2010-04-21), DE, pages 159 - 162, XP055536430, ISSN: 0018-3768, DOI: 10.1007/s00107-010-0430-1
• "ISO 5660-1:2015 - Reaction-to-fire tests - Heat release, smoke production and mass loss rate - Part 1: Heat release rate (cone calorimeter method) and smoke production rate (dynamic measurement)", vol. ISO 5660-1:2015, 1 March 2015 (2015-03-01), pages 1 - 55, XP009516126, Retrieved from the Internet <URL:https://www.iso.org/standard/57957.html>

**EP 3 824 211 B1**

**Beschreibung**

Die Erfindung betrifft eine Brandschutzlösung in Form einer Durchführungsanordnung mit einem Durchführungsmodul für Kabel, Kabelbündel, Kabeltrassen, Rohre, Rohrleitungen und/oder Leerrohre, sowie Kombinationen aus diesen, zum Einbau in Holzwand- und/oder Holzdeckenkonstruktionen in Gebäuden, die auf eine Verwendung von nicht-holzartigem Material, wie Trockenbaumaterialien, mineralische Materialien und metallischen Materialien, verzichtet.

Bei heutigem Einbau von Durchführungen für Kabel, Kabelbündel, Kabeltrassen, Rohre, Rohrleitungen, Leerrohre und/oder Kombinationen davon, welche bestimmte Anforderungen an den Brandschutz haben, werden grundsätzlich zwei Einbaumethoden verwendet. Die erste Methode umfasst die Verwendung von Kapselung des umliegenden Holzmaterials mit nicht-brennbaren Materialien, wie z.B. Gipskarton, gefolgt von einem Einbau eines Mörtelschottes, was dazu führt, dass die Durchführung in einem nicht-brennbaren Material angesiedelt ist, und somit wie eine Durchführung im Massivbau behandelt wird. Die zweite Methode umfasst die Verwendung von Kapselung des umliegenden Holzmaterials mit nichtbrennbarem Materialen gefolgt von einem Einbau eines Weichschottes oder Mineralwolleblocks. In diesen wird dann die eigentliche Durchführung eingebaut.

Bei diesen beiden Methoden, wird neben dem Material Holz ein weiteres, artfremdes Material verwendet. Dieses bringt im Falle des Mörtels neben einem weiteren Material auch noch Wasser in die Baustelle oder Konstruktion ein, das bei dem anliegenden Holz zu einem Quellen und Schwinden, und damit zu einer Dimensionsinstabilität führt. Zusätzlich kann durch das Einbringen von Wasser in Gebäude oder Konstruktion auch Schimmel oder anderweitiger mikrobieller Befall verursacht werden.

Bei der Verwendung von Mineralwolle, insbesondere in der Verbindung mit einem kapselnden Rahmen, ist ein Abbrand anliegender Holzflächen nicht auszuschließen, so dass im Brandfall mit einem Rauchdurchtritt, bzw. dem Durchtritt von heißen Gasen, an der Holzfläche gerechnet werden muss, oder diese zusätzlich geschützt werden muss. Bei den Mineralwollprodukten muss die Fuge immer vor Ort mit Mineralwolle gefüllt werden, was einen erhöhten Arbeitsaufwand und im Falle von offenen Baustellen, eine starke Abhängigkeit von der Witterung verursacht.

Ein weiterer Nachteil beider Methoden, ist der resultierende Ästhetikwechsel. Ein eigentlich in ästhetischem Holz gefertigtes Gebäude bekommt so einen Bruch in der vom Architekten gewünschten Optik. Darüberhinaus ist ein solcher Einbau natürlich sehr arbeits- und materialaufwändig.

Verbindungssysteme von Holzbauteilen zu anderen nicht-holzartigen Bauteilen sind bekannt. WO 18011329 A1 beschreibt ein Verbindungssystem für Holzbauelemente mit Gebäudeelementen und EP 1 626 149 A2 beschreibt einen flächigen Anschluss für eine Brandschutzverglasung. DE 20 2007 013237 U1 beschreibt ein Modul zum Durchführen einer Abgasführenden Leitung mit zusätzlichem nicht-holzartigem Dämmmaterial.

DE202015000505U offenbart eine Wanddurchführungsanordnung für Lüftungsleitungen. Einer Brandschutzklappe wird eine Ummantelung aus nicht brennbaren Material zugeordnet, die zwischen der Brandschutzklappe und einer Gebäudewand angeordnet ist.

CH679622 A5 offenbart ein vorgefertigtes Bauteil zur durchführung von Kabeln oder Leitungen. Das Bauteil besteht aus dünnen Stäben, die aus flammhemmend imprägniertes Hartholz sein können.

Aufgabe der Erfindung ist es, ein Durchführungsmodul für Kabel, Kabelbündel, Kabeltrassen, Rohre, Rohrleitungen, Leerrohre und/oder Kombinationen davon, bereitzustellen, das in verschiedene Holzwand- und/oder Holzdeckenkonstuktionen eingebaut wird, das eine vorgegebene Brandschutzleistung erbringt, wobei an der Einbaufläche auf Verwendung von nicht-holzartigem Material, wie Trockenbaumaterialien, mineralische Materialien und metallischen Materialien, verzichtet wird. Darüberhinaus ist es Aufgabe der Erfindung ein Durchführungsmodul bereitzustellen, dass die Anwendung der Kapselungen vermeidet sowie das Eindringen von Wasser und Feuchtigkeit in eine Holzwand- und/oder Holzdeckenkonstruktion verhindert. Eine weitere Aufgabe der Erfindung ist es, ein Durchführungsmodul bereitzustellen, das universell in Holzwand- und/oder Holzdeckenkonstruktion einbaubar ist und einen zuverlässigen Brand- und Rauchgasschutz gewährleistet. Eine weitere Aufgabe der Erfindung ist es, eine Brandschutzlösung in Form eines Durchführungsmoduls bereitzustellen, das in geprüfte und/oder zugelassene Holzwand- und/oder Holzdeckenkonstruktion einbringbar ist. Eine weitere Aufgabe der Erfindung ist es, ein Durchführungsmodul bereitzustellen, das eine flexible Dimensionierung der Durchführungsfläche ermöglicht.

Zur Lösung der Aufgabe ist eine Durchführungsanordnung gemäß Anspruch 1 vorgesehen.

Daher betrifft die vorliegende Erfindung eine Durchführungsanordnung mit einem Durchführungsmodul für Kabel, Kabelbündel, Kabeltrassen, Rohre, Rohrleitungen, Leerrohre und/oder Kombinationen davon, bestehend aus Laubholz, Nadelholz oder Mischungen davon, zum Einbau in eine geprüfte und/oder zugelassene Holzwand- und/oder Holzdeckenkonstruktion in Gebäuden, wobei die geprüfte und/oder zugelassene Holzwand- und/oder Holzdeckenkonstruktion eine gleiche oder kleinere Abbrandrate aufweist als das Durchführungsmodul, wobei das Durchführungsmodul einen quaderförmigen Körper aufweist mit Kantenlängen a, b, c, wobei c die Kantenlänge entsprechend der Einbaudicke (D) des Durchführungsmoduls darstellt, und wobei das Durchführungsmodul eine nominelle Abbrandrate von 0,7 mm/min oder weniger aufweist, gemessen mit einem Cone-Calorimeter nach ISO 5660.

Bei einem Sandwhichaufbau der Holzwand- und/oder Holzdeckenkonstruktion ist im Sinne der Erfindung, dass die geprüfte und/oder zugelassene Holzwand- und/oder Holzdeckenkonstruktion eine gleiche oder kleinere mittlere Abbrandrate aufweist als das Durchführungsmodul.

Das Durchführungsmodul der vorliegenden Erfindung besteht aus einem Holz mit einem definierten Brandverhalten, wie beispielsweise mit einer Abbrandrate von 0,7 mm/min. Insbesondere besteht das Durchführungsmodul aus einem Holz ausgewählt aus der Gruppe bestehend aus Buche, Eiche, Esche, Fichte, Kiefer, Lärche, Birke und Mischungen davon. Bevorzugt besteht das Durchführungsmodul aus Brettschichtholz, Furniersperrholz oder Brettsperrholz. Besonders bevorzugt besteht das Durchführungsmodul aus Brettsperrholz, auch bekannt als CLT (cross laminated timber).

Das Durchführungsmodul eignet sich als Brandschutzlösung zum Durchführen von Kabeln, Kabelbündeln, Kabeltrassen, Rohren, Rohrleitungen, Leerrohren und/oder Kombinationen davon, durch eine Holzwand- und/oder Holzdeckenkonstruktion in Gebäuden. Insbesondere eignet sich das Durchführungsmodul als universelle Brandschutzlösung für geprüfte und/oder zugelassene Holzwand oder Holzdecken.

Holzwände, in die das Durchführungsmodul eingebaut wird sind beispielsweise Brettstapel- oder Blockbauwände, Wände in Tafelbauweise, Brettsperrholz-, Brettschichtholz- oder Furnierschichtholzwände. Dabei ist es unwesentlich, ob diese Wände Beplankt oder unbeplankt sind, oder zusätzliche Aufbauten aufweisen, für beispielsweise Akustik-Eigenschaften. Bevorzugt sind Brettsperrholz-, Brettschichtholz- oder Furnierschichtholzwände, wobei Brettsperrholzwände besonders bevorzugt sind.

Wesentlich an der Erfindung ist, dass die Wand welche durchdrungen werden soll eine gleiche oder kleinere Abbrandrate aufweist, als die des eingebauten Durchführungsmoduls. Diese hat eine Abbrandrate von 0,7mm/min oder weniger.

Bei einem Sandwhichaufbau der Holzwand- und/oder Holzdeckenkonstruktion weist die geprüfte und/oder zugelassene Holzwand- und/oder Holzdeckenkonstruktion eine gleiche oder kleinere mittlere Abbrandrate auf als das Durchführungsmodul.

Decken, in die das Durchführungsmodul eingebaut wird sind beispielsweise Decken mit Träger oder Balkenlage, Brettstapeldecken, Rippen- oder Kastendecken, Brettstapel-, Brettsperrholz-, Brettschichtholz- oder Furnierschichtholzdecken. Bevorzug sind Brettstapel-, Brettsperrholz-, Brettschichtholz- oder Furnierschichtholzdecken, wobei Brettsperrholzdecken besonders bevorzugt sind.

Erfindungsgemäß weist das Durchführungsmodul einen quaderförmigen Körper mit Kantenlängen a, b, c, auf, wobei a die Kantenlänge der Höhe, b die Kantenlänge der Breite, und c die Kantenlänge der Tiefe des Durchführungsmoduls darstellt, wobei c mit der Einbaudicke (D) des Durchführungsmoduls gleichzusetzen ist. Die Einbaudicke (D) des Durchführungsmoduls für verschiedene Brandschutzzielzeiten wird nach folgender Formel berechnet:

$$D = \text{Abbrandrate [mm/min]} \times \text{Branddauer [min]} \times G;$$

worin G einen Sicherheitsfaktor von mindestens $\geq 1{,}5$ darstellt.

G liegt vorzugsweise in einem Bereich von $\geq 1{,}5$ bis $\leq 3.0$. Bevorzugt liegt G in einem Bereich von $G \geq 1{,}6$ bis $\leq 2.5$. Besonders bevorzugt ist $G \geq 2.0$. Hiermit ist sichergestellt, dass den in das Durchführungsmodul eingebrachten Kabel, Kabelbündel, Kabeltrassen, Rohre, Rohrleitungen, Leerrohre und/oder Kombinationen davon, im Falle von $G = 2$ wenigstens die Hälfte des Holzmaterials als Haltepunkt verbleibt. Bei einem Sicherheitsfaktor von $G = 1$ und entsprechender Einbaudicke kann ein zuverlässiger Brandschutz nicht gewährleistet werden, da ein völliges Ab- oder Durchbrennen der Konstruktion zu erwarten ist.

In einer bevorzugten Ausführungsform liegt (D) in einem Bereich von 100 mm bis 180 mm. Bevorzugt liegt (D) in einem Bereich zwischen 130 und 160 mm, besonders bevorzugt liegt (D) in einem Bereich zwischen 140 und 150 mm, am meisten bevorzugt ist (D) 150 mm.

In einer bevorzugten Ausführungsform sind die Kantenlängen a und b mindestens 125 mm oder mehr. Dies ist das technische Minimum, das zur Durchführung eines Kabels bei sinnhaften Randabständen erforderlich ist. Bevorzugt sind a und b in zwischen 200 und 600 mm, besonders bevorzugt sind a und b zwischen 300 und 500 mm, am meisten bevorzugt sind a und b 300 mm. Die Kantenlängen a und b des Durchführungsmoduls können auch von unterschiedlicher Länge sein.

Darüberhinaus ist bevorzugt, dass das zu durchführende Kabel, Kabelbündel, Kabeltrasse, Rohr, Rohrleitung, Leerrohr und/oder die Kombinationen davon, in einem Mindestabstand (f) von 30 mm, vorzugsweise 50 mm, entfernt von den Aussenkanten des quaderförmigen Körpers, auch Randabstand genannt, positioniert und montiert wird. Dies stellt neben einem zuverlässigen Brand- und Rauchgasschutz insbesondere die Dimensionsstabilität sicher und gewährt die statische Stabilität, welche für die mechanische Befestigung nötig ist. Daher ergibt sich eine Kantenlänge von a und/oder b aus den erforderlichen Randabständen. Der Mindestabstand der Installation zum Rand des Durchführungsmoduls muss größer oder gleich 30 mm sein, vorzugweise größer gleich 50 mm. Bei geringeren Abständen ist mit einer Verwindung und ggf. mit einer verringerten Stabilität des Durchführungsmoduls zu rechnen, welche zu reduzierter Brandschutzperformance führt. Optional kann die Decklage der Holzwand- und/oder Holzdeckenkonstruktion auch noch über den Rand des eingebauten Durchführungsmoduls hinausragen, wodurch zusätzlich eine einheitlichere Ästhetik erzielt werden kann.

Das Durchführungsmodul für Kabel, Kabelbündel, Kabeltrassen, Rohre, Rohrleitungen, Leerrohre und/oder Kombinationen davon, der vorliegenden Erfindung wird in eine geprüfte und/oder zugelassene Holzwand- und/oder Holzdeckenkonstruktion eingebaut. Dabei muss ein flächenbündiger Anschluss an das Konstruktionsholz geschaffen werden. Die Schaffung des flächenbündigen Anschlusses an das Konstruktionsholz erfolgt, indem das Durchführungsmodul mittels während der Brandprüfung nicht der Brandquelle ausgesetzter Verbinder oder Verbundelemente mit dem primären Holzkonstruktionselement so verbunden wird, dass die Verbinder oder Verbundelemente über eine definierte Zeit nicht dem Feuer ausgesetzt sind. Vorzugweise erfolgt diese Verbindung über eine Schraub- oder Nagelverbindung. Denkbar sind auch Verbindungen mittels Bolzen, Nieten, Gewindestangen, Holzdübeln, Klammern, hochtemperaturbeständigen Verklebungen, wie beispielweise Kaliumwassergläser, oder anderen zimmermansmäßigen Verbindungen. Besonders bevorzugt ist eine Verbindung mit Stahl- oder Edelstahlschrauben. Diese können zusätzlich verzinkt oder passiviert sein. Die Passivierung stellt sicher, dass die Schrauben ihren Korrosionsschutz im Holz behalten.

In einer besonders bevorzugten Ausführungsform erfolgt die Verbindung des Durchführungsmoduls mit dem primären Holzkonstruktionselement über eine versenkte Installation-verdeckte Verschraubung. Bei einerversenkten Installation wird das Holzmaterials als Schutz vor dem direkten Aussetzen des Verbindermaterials zum Feuer genutzt, was dem Fachmann bekannt ist und mittels der nominellen Abbrandrate bestimmbar ist.

Die Befestigung des Durchführungsmoduls in der umgebenden Holzwand- und/oder Holzdeckenkonstruktion erfolgt bevorzugt bei jeweils 1/3 von c mit wenigstens zwei Befestigungspunkten je Seite, besonders bevorzugt mit wenigstens einem Befestigungspunkt je Seite auf halber Einbautiefe.

Darüberhinaus ist stellt das Durchführungsmodul für Kabel, Kabelbündel, Kabeltrassen, Rohre, Rohrleitungen, Leerrohre und/oder Kombinationen davon, bestehend aus Laubholz, Nadelholz oder Mischungen davon, eine universelle Brandschutzlösung für eine geprüfte und/oder zugelassene Holzwand- und/oder Holzdeckenkonstruktion in Gebäuden dar. Insbesondere ist das Durchführungsmodul eine Brandschutzlösung für eine geprüfte und/oder zugelassene Holzwand- und/oder Holzdeckenkonstruktion in Gebäuden, wobei die geprüfte und/oder zugelassene Holzwand- und/oder Holzdeckenkonstruktion eine gleiche oder kleinere Abbrandrate aufweist als das Durchführungsmodul, wobei das Durchführungsmodul einen quaderförmigen Körper aufweist mit Kantenlängen a, b, c, wobei c die Kantenlänge entsprechend der Einbaudicke (D) des Durchführungsmoduls darstellt, und wobei das Durchführungsmodul eine nominelle Abbrandrate von 0,7 mm/min oder weniger aufweist.

Die Erfindung wird anhand des folgenden Beispiels in Verbindung mit den beigefügten Figuren näher erläutert. In diesen zeigen:

- Figur 1 in einer perspektivischen Ansicht ein erfindungsgemäßes Durchführungsmodul, und

- Figur 2 in einer perspektivischen Ansicht ein erfindungsgemäßes Durchführungsmodul eingebaut in eine Holzwandkonstruktion.

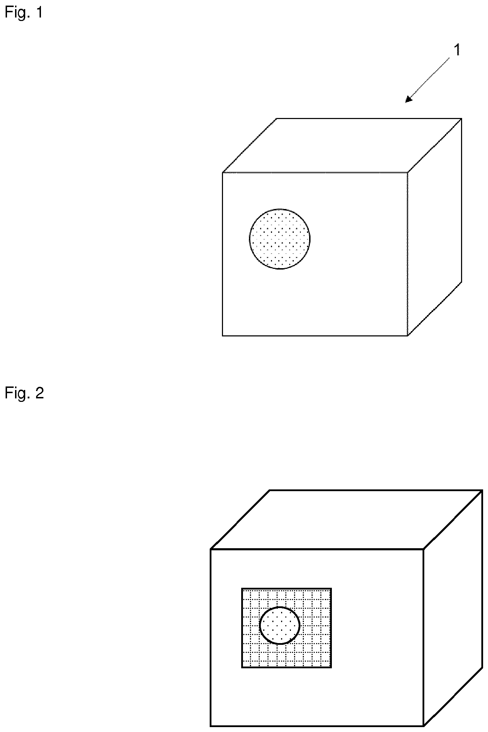

In **Figur 1** ist eine Ausführungsform des Durchführungsmoduls der vorliegenden Erfindung dargestellt. Das Durchführungsmodul 1 hat einen quaderförmigen Körper mit Kantenlängen a, b, c, wobei c die Kantenlänge entsprechend der Einbaudicke (D) ist. Durchführung K für durchzuführende Kabel, Kabelbündel, Kabeltrassen, Rohre, Rohrleitungen, Leerrohre und/oder Kombinationen davon, ist in einem Mindestabstand (f) von etwa 50 mm entfernt von den Aussenkanten des quaderförmigen Körpers positioniert und montiert.

In **Figur 2** ist das Durchführungsmodul 1 in eine Holzwandkonstruktion 2 eingebaut. Die Bezugszeichen sind die gleichen wie für Figur 1.

Klassifizierungstest des Durchführungsmoduls: In ein Durchführungsmodul, auch Block genannt, aus Brettsperrholz mit der Dicke von d=148mm (Einbaudicke (D) gleich Kantenlänge c) wird eine Brandschutzhülse, wie beispielsweise CFS-SL von Hilti (fö 113 mm), mit A- und B-Kabeln (Kabelaussendurchmesser $\varnothing \leq 21$ mm) eingebaut (fö 120 Bauteilöffnung mit Ringspaltverschlussmaterial, beispielsweise Brandschutzfugenmasse CFS-S ACR von Hilti). Diese haben eine Feuerwiderstandsklasse nach EN 13501-2 von EI 90. Das zu durchdringende zugelassene Holzwandelement hat ebenfalls eine Feuerwiderstandsklasse von EI 90 (Typ, "Leno Brettsperrholz" ETA-10/0241). Das Durchführungsmodul hat eine Seitenkantenlänge a x b von 300 x 300 mm. Die Befestigung mittels verdeckter Verschraubung des Durchführungsmoduls in der umgebenden Holzwandelement erfolgt bei jeweils 1/3 von c mit zwei Befestigungspunkten je Seite. Klassifizierungstests nach EN 13501-2:2016 haben ergeben, dass das mittels verdeckter Verschraubung eingebaute Durchführungsmodul im Gesamtbauteil ebenfalls eine Feuerwiderstandsklasse von EI 90 erzielt. Diese belegen einen universellen Einsatzbereich des Moduls als Brandschutzlösung in verschiedenen geprüfte und/oder zugelassenen Holzwand- und/oder Holzdeckenkonstruktionen.

Es wurde gezeigt, dass das Durchführungsmodul der vorliegenden Erfindung eine vorgegebene Brandschutzleistung erbringt und daher universell als Brandschutzlösung in verschiedenen geprüften und/oder zugelassenen Holzwand- und/oder Holzdeckenkonstruktionen eingesetzt werden kann. Das Durchführungsmodul eignet sich für Kabel, Kabelbündel, Kabeltrassen, Rohre, Rohrleitungen, Leerrohre und/oder Kombinationen davon. Ein weiterer gezeigter Vorteil ist, dass an Einbauflächen auf die Verwendung von nicht-holzartigem Material, wie Trockenbaumaterialien, mineralische Materialien und metallischen Materialien, verzichtet werden kann. Ein Eindringen von Wasser und Feuchtigkeit in eine Holzwand- und/oder Holzdeckenkonstruktion wird verhindert. Letztlich wurde gezeigt, dass das Durchführungsmodul der vorliegenden Erfindung eine flexible Dimensionierung der Durchführungsfläche ermöglicht.

Es wurde auch gezeigt, dass das Durchführungsmodul für Kabel, Kabelbündel, Kabeltrassen, Rohre, Rohrleitungen, Leerrohre und/oder Kombinationen davon, bestehend aus Laubholz, Nadelholz oder Mischungen davon, eine universelle Brandschutzlösung für eine geprüfte und/oder zugelassene Holzwand- und/oder Holzdeckenkonstruktion in Gebäuden darstellt. Insbesondere wurde gezeigt, dass das Durchführungsmodul eine Brandschutzlösung für eine geprüfte und/oder zugelassene Holzwand- und/oder Holzdeckenkonstruktion in Gebäuden, wobei die geprüfte und/oder zugelassene Holzwand- und/oder Holzdeckenkonstruktion eine gleiche oder kleinere Abbrandrate aufweist als das Durchführungsmodul, wobei das Durchführungsmodul einen quaderförmigen Körper aufweist mit Kantenlängen a, b, c, wobei c die Kantenlänge entsprechend der Einbaudicke (D) des Durchführungsmoduls darstellt, und wobei das Durchführungsmodul eine nominelle Abbrandrate von 0,7 mm/min oder weniger aufweist.

## Patentansprüche

1. Durchführungsanordnung aufweisend eine geprüfte und/oder zugelassene Holzwand- oder Holzdeckenkonstruktion für Gebäude und ein Durchführungsmodul für Kabel, Kabelbündel, Kabeltrassen, Rohre Rohrleitungen, Leerrohre und/oder Kombinationen davon, bestehend aus Laubholz, Nadelholz oder Mischungen davon, wobei das Durchführungsmodul in die Holzwand- oder Holzdeckenkonstruktion eingebaut ist, wobei ein flächenbündiger Anschluss an Holzwand- oder Holzdeckenkonstruktion mittels Bolzen, Nieten, Gewindestangen, Holzdübeln, Klammern, hochtemperaturbeständigen Verklebungen, oder anderen zimmermannsmäßigen Verbindungen erfolgt, wobei die geprüfte und/oder zugelassene Holzwand- und/oder Holzdeckenkonstruktion eine gleiche oder kleinere Abbrandrate aufweist als das Durchführungsmodul, wobei das Durchführungsmodul einen quaderförmigen Körper aufweist mit Kantenlängen a, b, c, wobei c die Kantenlänge entsprechend der Einbaudicke (D) des Durchführungsmoduls darstellt, und wobei das Durchführungsmodul eine nominelle Abbrandrate von 0,7 mm/min oder weniger aufweist, gemessen mit einem Cone-Calorimeter nach ISO 5660.

2. Durchführungsanordnung nach Anspruch 1, worin a die Kantenlänge der Höhe, b die Kantenlänge der Breite, und c die Kantenlänge der Tiefe des Durchführungsmoduls darstellt, wobei c mit der Einbaudicke (D) des Durchführungsmoduls gleichzusetzen ist.

3. Durchführungsanordnung nach Anspruch 1 oder 2, worin die Kantenlängen a und b mindestens 125 mm oder größer sind.

4. Durchführungsanordnung nach einem der vorherigen Ansprüche, worin das Durchführungsmodul aus Brettschichtholz, Furniersperrholz oder Brettsperrholz besteht.

5. Durchführungsanordnung nach einem der vorherigen Ansprüche, worin das Durchführungsmodul aus einem Holz ausgewählt aus der Gruppe bestehend aus Buche, Eiche, Esche, Fichte, Kiefer, Lärche, Birke und Mischungen davon, besteht.

6. Durchführungsanordnung nach einem der vorherigen Ansprüche, worin das zu durchführende Kabel, Kabelbündel, Kabeltrasse, Rohr, Rohrleitung, Leerrohr und/oder die Kombination davon, in einem Mindestabstand von 30 mm entfernt von den Aussenkanten des quarderförmigen Körpers positionierbar und montierbar ist.

7. Durchführungsanordnung nach einem der vorherigen Ansprüche, worin die geprüfte und/oder zugelassene Holzwandkonstruktion eine Brettsperrholz-, Brettschichtholz- oder Furnierschichtholzwand ist.

8. Durchführungsanordnung nach einem der vorherigen Ansprüche, worin die geprüfte und/oder zugelassene Holzdeckenkonstruktion eine Brettstapel-, Brettsperrholz-, Brettschichtholz- oder Furnierschichtholzdecke ist.

9. Durchführungsanordnung nach einem der vorherigen Ansprüche, worin die Einbaudicke (D) in einem Bereich von 100 mm bis 180 mm liegt.

**10.** Verfahren zum Einbau eines Durchführungsmoduls in eine geprüfte und/oder zugelassene Holzwand- oder Holzdeckenkonstruktion zur Entstehung einer Durchführungsanordnung nach einem der Ansprüche 1 bis 9, umfassend:

Bestimmung einer Brandschutzzielzeit als Branddauer in Minuten, und anschließend
Bestimmung der Einbaudicke (D) des Durchführungsmoduls anhand der Formel:

$$D = \text{Abbrandrate [mm/min]} \times \text{Branddauer [min} \times \text{G];}$$

worin G einen Sicherheitsfaktor von mindestens $\geq 1{,}5$ darstellt.

**11.** Verfahren nach Anspruch 10, worin G $\geq 2.0$ ist.

**12.** Verfahren nach Anspruch 10 oder 11, wobei der Anschluss bei jeweils 1/3 von der Kantenlänge c mit wenigstens zwei Befestigungspunkten je Seite erfolgt.

**13.** Verwendung eines Durchführungsmoduls, als universelle Brandschutzlösung für eine geprüfte und/oder zugelassene Holzwand- und/oder Holzdeckenkonstruktion in Gebäuden zur Entstehung einer Durchführungsanordnung nach einem der Ansprüche 1 bis 9.

**Claims**

**1.** Feedthrough arrangement comprising a tested and/or approved wooden wall construction or wooden ceiling construction for buildings, and a feedthrough module for cables, cable bundles, cable runs, pipes, conduits, ducts and/or combinations thereof, consisting of hardwood, softwood or mixtures thereof, wherein the feedthrough module is installed in the wooden wall construction or wooden ceiling construction, wherein a flush connection to the wooden wall construction or wooden ceiling construction is achieved by means of bolts, rivets, threaded rods, wooden dowels, clamps, high-temperature-resistant adhesives or other carpentry-type connections, wherein the tested and/or approved wooden wall construction and/or ceiling construction has an equal or lower burning rate than the feedthrough module, wherein the feedthrough module has a cuboid body with edge lengths a, b, c, wherein c represents the edge length corresponding to the installation thickness (D) of the feedthrough module, and wherein the feedthrough module has a nominal burning rate of 0.7 mm/min or less, measured using a cone calorimeter according to ISO 5660.

**2.** Feedthrough arrangement according to claim 1, wherein a represents the edge length of the height, b the edge length of the width, and c the edge length of the depth of the feedthrough module, wherein c is to be equated with the installation thickness (D) of the feedthrough module.

**3.** Feedthrough arrangement according to either claim 1 or claim 2, wherein the edge lengths a and b are at least 125 mm or greater.

**4.** Feedthrough arrangement according to any of the preceding claims, wherein the feedthrough module is made of glued laminated timber, plywood or cross-laminated timber.

**5.** Feedthrough arrangement according to any of the preceding claims, wherein the feedthrough module is made of a wood selected from the group consisting of beech, oak, ash, spruce, pine, larch, birch and mixtures thereof.

**6.** Feedthrough arrangement according to any of the preceding claims, wherein the cables, cable bundles, cable runs, pipes, conduits, ducts and/or the combination thereof to be fed through can be positioned and mounted at a minimum distance of 30 mm away from the outer edges of the cuboid body.

**7.** Feedthrough arrangement according to any of the preceding claims, wherein the tested and/or approved wooden wall construction is a cross-laminated timber, glued laminated timber or veneer laminated wood wall.

**8.** Feedthrough arrangement according to any of the preceding claims, wherein the tested and/or approved wooden ceiling construction is a board stack, cross-laminated timber, glued laminated timber or veneer laminated wood ceiling.

9. Feedthrough arrangement according to any of the preceding claims, wherein the installation thickness (D) is in a range of from 100 mm to 180 mm.

10. Method for installing a feedthrough module in a tested and/or approved wooden wall construction or wooden ceiling construction to produce a feedthrough arrangement according to any of claims 1 to 9, comprising:

determining a fire protection target time as a fire duration in minutes, and then
determining the installation thickness (D) of the feedthrough module using the formula:

$$D = \text{burning rate [mm/min]} \times \text{fire duration [min} \times G];$$

where G represents a safety factor of at least $\geq 1.5$.

11. Method according to claim 10, wherein G is $\geq 2.0$.

12. Method according to either claim 10 or claim 11, wherein the connection is made at 1/3 of the edge length c by means of at least two fastening points on each side.

13. Use of a feedthrough module as a universal fire protection solution for a tested and/or approved wooden wall construction and/or ceiling construction in buildings to produce a feedthrough arrangement according to any of claims 1 to 9.

**Revendications**

1. Agencement de passage présentant une construction de paroi ou de plafond en bois testée et/ou homologuée pour des bâtiments, et un module de passage pour des câbles, faisceaux de câbles, chemins de câbles, tuyaux, tuyauteries, tuyaux vides et/ou des combinaisons de ceux-ci, constitué de bois feuillu, bois résineux ou des mélanges de ceux-ci, le module de passage étant monté dans la construction de paroi ou de plafond en bois, un raccordement affleurant à la construction de paroi ou de plafond en bois se faisant à l'aide de boulons, goujons, tiges filetées, chevilles de bois, agrafes, collages résistants à de hautes températures, ou d'autres raccords de charpentier, la construction de paroi et/ou de plafond en bois testée et/ou homologuée présentant un taux de combustion inférieur ou égal à celui du module de passage, le module de passage présentant un corps parallélépipédique comportant des longueurs d'arêtes a, b, c, c représentant la longueur d'arête correspondant à l'épaisseur de montage (D) du module de passage, et le module de passage présentant un taux de combustion nominal de 0,7 mm/min ou moins, mesuré au moyen d'un calorimètre à cône selon ISO 5660.

2. Agencement de passage selon la revendication 1, dans lequel a représente la longueur d'arête de la hauteur, b représente la longueur d'arête de la largeur, et c représente la longueur d'arête de la profondeur du module de passage, c étant équivalent à l'épaisseur de montage (D) du module de passage.

3. Agencement de passage selon la revendication 1 ou 2, dans lequel les longueurs d'arêtes a et b sont au moins égales à 125 mm ou supérieures.

4. Agencement de passage selon l'une des revendications précédentes, dans lequel le module de passage est constitué de bois lamellé collé, placage de bois ou bois lamellé croisé.

5. Agencement de passage selon l'une des revendications précédentes, dans lequel le module de passage est constitué d'un bois choisi dans le groupe constitué de hêtre, chêne, frêne, épicéa, pin, mélèze, bouleau et des mélanges de ceux-ci.

6. Agencement de passage selon l'une des revendications précédentes, dans lequel le câble, faisceau de câbles, chemin de câbles, tuyau, tuyauterie, tuyau vide à faire passer et/ou la combinaison de ceux-ci peut être positionné(e) et monté(e) à une distance minimale de 30 mm loin des arêtes extérieures du corps parallélépipédique.

7. Agencement de passage selon l'une des revendications précédentes, dans lequel la construction de paroi en bois testée et/ou homologuée est une paroi en bois lamellé croisé, en bois lamellé collé ou en placage de bois.

**8.** Agencement de passage selon l'une des revendications précédentes, dans lequel la construction de plafond en bois testée et/ou homologuée est un plafond en lames de bois, en bois lamellé croisé, en bois lamellé collé ou en placage de bois.

**9.** Agencement de passage selon l'une des revendications précédentes, dans lequel l'épaisseur de montage (D) est située dans une plage de 100 mm à 180 mm.

**10.** Procédé de montage d'un module de passage dans une construction de paroi ou de plafond en bois testée et/ou homologuée pour former un agencement de passage selon l'une des revendications 1 à 9, comprenant :

la détermination d'un temps cible pour la protection contre l'incendie comme durée d'incendie en minutes, et la détermination de l'épaisseur de montage (D) du module de passage sur la base de la formule :

$$D = \text{taux de combustion [mm/min]} \times \text{durée d'incendie [min} \times G] \; ;$$

où G représente un facteur de sécurité au moins $\geq 1,5$.

**11.** Procédé selon la revendication 10, dans lequel G est $\geq 2.0$.

**12.** Procédé selon la revendication 10 ou 11, le raccordement se faisant à 1/3 de la longueur d'arête c avec au moins deux points de fixation par côté.

**13.** Utilisation d'un module de passage, comme solution universelle de protection contre l'incendie, pour une construction de paroi et/ou de plafond en bois testée et/ou homologuée dans des bâtiments, pour former un agencement de passage selon l'une des revendications 1 à 9.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 18011329 A1
- EP 1626149 A2
- DE 202007013237 U1
- DE 202015000505 U
- CH 679622 A5